**Europäisches Patentamt**

**European Patent Office**

**Office européen des brevets**

(19)

(11) Publication number : **0 339 682 B1**

# (12) EUROPEAN PATENT SPECIFICATION

(45) Date of publication of patent specification :
26.08.92 Bulletin 92/35

(51) Int. Cl.⁵ : **B60H 1/32,** F16F 15/08,
F25B 31/00

(21) Application number : **89107801.6**

(22) Date of filing : **28.04.89**

(54) **Mounting mechanism for an automotive air conditioning compressor.**

(30) Priority : **28.04.88 JP 58357/88 U**

(43) Date of publication of application :
**02.11.89 Bulletin 89/44**

(45) Publication of the grant of the patent :
**26.08.92 Bulletin 92/35**

(84) Designated Contracting States :
**DE FR GB IT SE**

(56) References cited :
**EP-A- 0 264 833**
**FR-A- 2 525 309**
**US-A- 4 600 367**
**JP-U-5761252**

(73) Proprietor : **SANDEN CORPORATION**
**20 Kotobuki-cho**
**Isesaki-shi Gunma, 372 (JP)**

(72) Inventor : **Imai, Soichiro**
**126 Nudejima-machi**
**Maebashi-shi Gunma, 371 (JP)**
Inventor : **Shimazaki, Seiji**
**976 Naganuma-machi**
**Isesaki-shi Gunma, 372 (JP)**

(74) Representative : **Prüfer, Lutz H., Dipl.-Phys.**
**Harthauser Strasse 25d**
**W-8000 München 90 (DE)**

EP 0 339 682 B1

Jouve, 18, rue Saint-Denis, 75001 PARIS

## Description

This invention relates to a mounting mechanism for connecting a compressor of an automotive air conditioning system to an automobile engine according to the precharacterizing portion of claim 1. Such a mounting mechanism including an axial vibration absorbing means is disclosed for example in document EP-A-0 264 833.

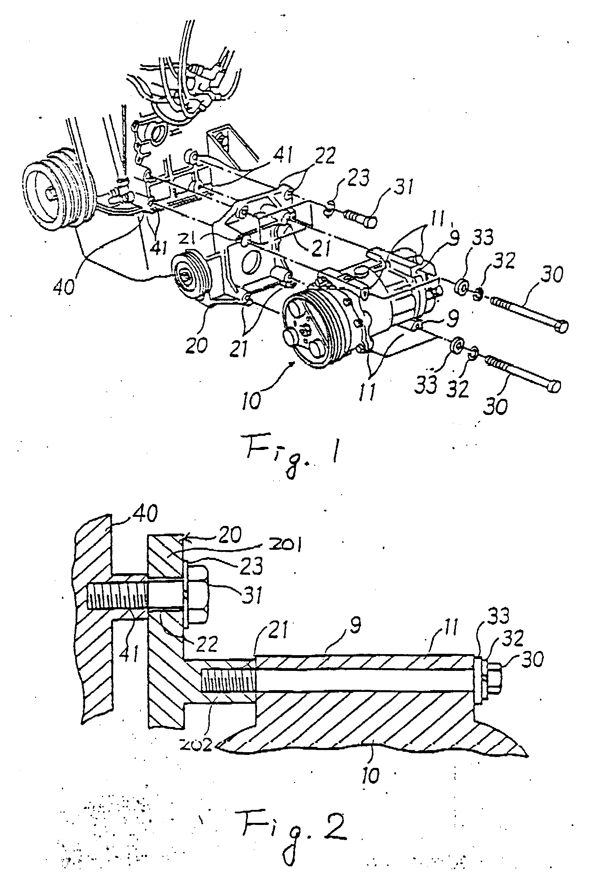

A further conventional mounting mechanism is shown in figures 1 and 2. This conventional arrangement includes four flange portions 11 extending radially from the housing of compressor 10 and a bracket 20 having a base portion 201 to be fixed on the engine 40, and flange portions 202 extending radially outwardly fom the base portion 201. Base portion 201 has a plurality of holes 22 disposed to be aligned with holes 41 formed on the end surface of engine 40 in the fixing position of bracket 20. Flange portions 202 have a plurality of holes 21 formed on the upper end surface thereof. Holes 21 are disposed to be aligned with holes 9 formed through flange portions 11 of compressor 10 in the mounting position of compressor 10. Bracket 20 is coupled with engine 40 by bolts 31 with washers 23 through holes 22 and 41. Compressor 10 is coupled with bracket 20 by bolts 30 with spring washers 32 and washers 33 through holes 9 and 21. Compressor 10 is thus mounted on engine 40 through bracket 20.

In this mounting construction, compressor 10 and mounting bracket 20, both of which are formed of high strength material, are directly connected through a bolt mechanism. Mechanical vibration, more specifically vibration in the axial direction, which is generated by the operation of compressor 10, is thus transmitted directly to engine 40, causing loud noise. The noise is transmitted from the engine compartment to the passenger compartment of the automobile.

It is the object of this invention to combine a further reduction of the transmission of vibration produced by the compressor to an automobile engine, thereby preventing the production of objectional noise, with high durability of the mounting mechanism.

This object is achieved by a mounting mechanism having features of claim 1.

Figure 1 is an exploded perspective view of a conventional mounting mechanism for a compressor in an automotive air conditioning system.

Figure 2 is an enlarged cross-sectional view of a part of a conventional mounting mechanism for a compressor in an automotive air conditioning system as shown in Figure 1.

Figure 3 is a exploded perspective view of a mounting mechanism for a compressor in an automotive air conditioning system in accordance with one embodiment of this invetion.

Figure 4 is an enlarged cross-sectional view of a part of a mounting mechanism for a compressor in an automotive air conditioning system as shown in Figure 3.

Figure 5 is a cross-sectional view taken along line I-I as shown in Figure 4.

Figure 6 is a perspective view of a mounting mechanism for a compressor in an automotive air conditioning system in accordance with another embodiment of this invention.

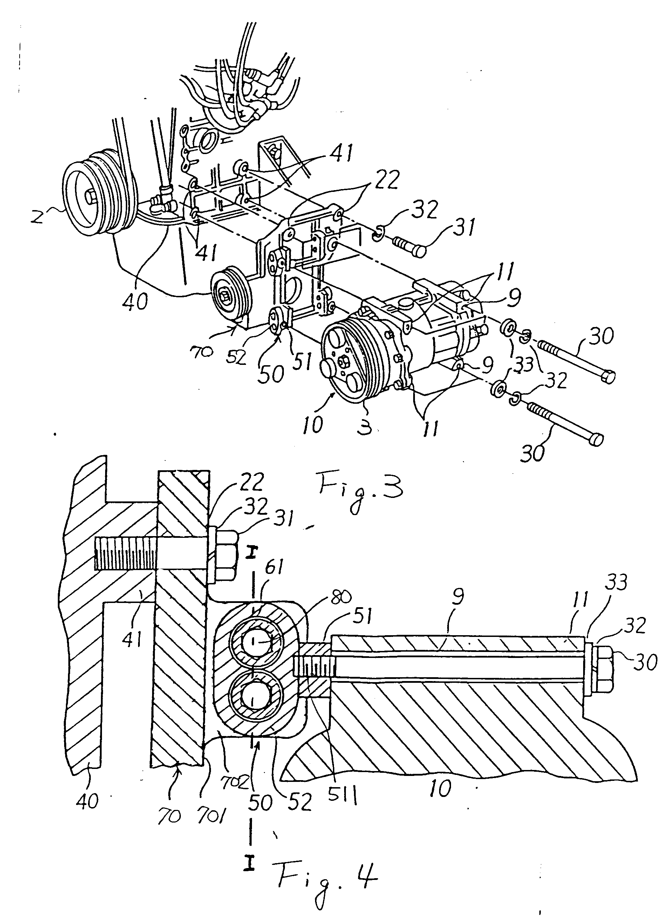

With reference to Figures 3, 4 and 5, the construction of a mounting mechanism for a compressor in an automotive air conditioning system in accordance with one embodiment of this invention is shown.

The same reference numerals are accorded on the same construction as in Figures 1 and 2 and repetition of the description for such a construction is omitted to simplify the specification. Automobile engine 40 has pulley 2 on the terminal end of its drive shaft. Compressor 10 also has pulley 3 on the terminal end of its drive shaft. Rotational power from engine 40 is transmitted to compressor 10 through a drive belt(not shown), which is disposed on the outer surface of pulleys 2 and 3 thereby connecting engine 40 to compressor 10. Compressor 10 is mounted on automobile engine 40 through mounting bracket 70. Mounting bracket 70 includes base portion 701 affixed to the engine and a plurality of flange portions 702 projecting radially (radial with respect to the compressor and engine drive shafts) outward from both end portions of base portion 701 and perpendicular to engine 40. Hole 702a is formed through each flange portion 702. Absorbing mechanism 50 is coupled with flange portion 702 by bolt 30. Absorbing mechanism 50 includes bolt receiving portion 51 and absorbing portion 52. Receiving portion 51 has hole 511 including screw thread receiving bolt 30 to connect between absorbing mechanism 50 and compressor 10. Absorbing portion 52 includes radially outer or outside ring spacer 61, radially inner or inside ring spacer 62 and cylindrical elastic member 63 made of elastic, vibration absorbing material, such as a vibroisolating rubber. The length of inside ring spacer 62 is longer than that of outside ring spacer 61. Elastic member 63 is attached on the outer surface of each inside ring spacer 62 by a vulcanizable adhesive, and each outside ring spacer 61 is also affixed on the outer surfce of elastic member 63 by a vulcanizable adhesive.

Compressor 10 has a plurality of flanges 11 projecting radially outward from both end portions of the housing of compressor 10. Hole 9 is formed through each flange 11. Bolt 30 passes through hole 9 and secures compressor 10 to receiving portion 51 of absorbing mechanism 50. Absorbing mechanism 50 connected to compressor 10 is coupled with flange portion 702 of mounting bracket 70 by bolts 80 passing through inner ring spacer 62.

When engine 40 starts, driving power is transmitted from engine 40 to compressor 10 through a belt, and compressor 10 is thus driven. During operation of compressor 10, although mechanical vibration is produced both axially and radially within compressor 10, the mechanical axial vibration which causes noise in the passenger compartment of the automobile is reduced by elastic member 63 of absorbing unit 52. Therefore, the noise produced in the engine compartment and transmitted to the passenger compartment is reduced, thereby improving the comfort of the automobile.

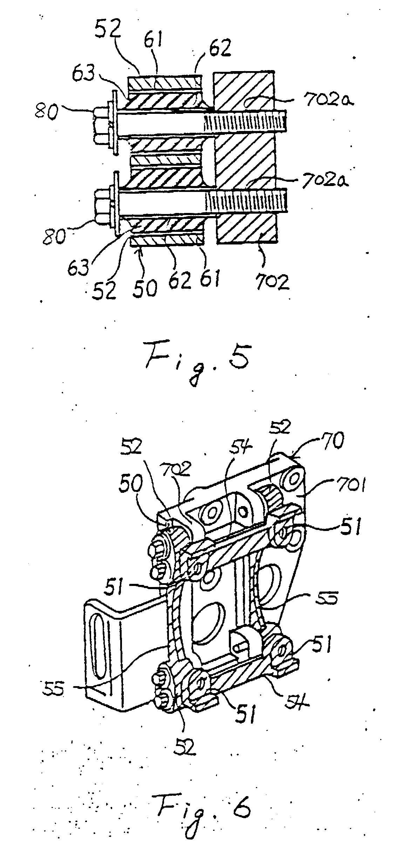

Referring to Figure 6, the construction of a mountng mechanism for a compressor in an automotive air conditioning system in acccordance with another embodiment of this invention is shown. Receiving portions 51 are integrally formed by rib 54 and absorbing portions 52 are also integrally formed by rib 55. Absorbing mechanism 50 is thus integrally connected to each other. Therefore, the mounting time to attach the absorbing means to mounting mechanism 70 can be reduced.

This invention has been described in detail in connection with the preferred embodiment but those are examples only and the invention is not restricted thereto. It will be easily understood by those skilled in the art that variations and modifications can be easily made within the scope or the annexed claims.

## Claims

1. A mounting mechanism for connecting a compressor (10) of an automotive air conditioning system to an automobile engine (40) such that a drive shaft of the compressor is disposed parallel to the drive shaft of the engine (40), the mounting mechanism comprising a mounting bracket (20,70) fixed to the engine (40) and having at least one first hole (702a), at least one flange portion (11) projecting form an outer peripheral surface of the compressor (10) and having at least one second hole (9), axial vibration absorbing means (50) having at least one third hole aligned with said first hole (702a) and at least one bolt (80) passing through said third hole to connect said axial vibration absorbing means (50) to said mounting bracket (70), said axial vibration absorbing means (50) being disposed adjacent to said first hole (702a), characterized in that said second hole in said flange portion (11) faces perpendicular to said first hole in the mounted position of the compressor (10), that said axial vibration absorbing means (50) is disposed adjacent to said second hole (9), and has at least one fourth hole (51) aligned with said second hole, and that at least one bolt (30) passes through said second hole (9) to connect said compressor (10) to said axial vibration absorbing means (50).

2. The mounting mechanism of claim 1, wherein said absorbing unit (50) comprises inside and outside spacers (62, 61), the vibration absorbing material (63) being disposed in the annular gap between said spacers (62, 61).

3. The mounting mechanism of claim 2, wherein said vibration absorbing material is a vibroisolating rubber.

4. The mounting mechanism of claim 1, wherein a plurality of said axial vibration absorbing means are integrally connected with each other by ribs (54, 55).

## Patentansprüche

1. Anbringungsmechanismus zum Verbinden eines Kompressors (10) einer Kraftfahrzeugklimaanlage mit einem Kraftfahrzeugmotor (40) so, daß eine Antriebswelle des Kompressors parallel zu der Antriebswelle des Motors (40) vorgesehen ist, wobei der Anbringungsmechanismus einen an dem Motor (40) befestigten und mindestens ein erstes Loch (702a) aufweisenden Anbringungsbügel (20, 40), mindestens einen von einer äußeren Umfangsoberfläche des Kompressors (10) vorstehenden und mindestens ein zweites Loch (9) enthaltenden Flanschabschnitt (11), eine Absorptionseinrichtung (50) für axiale Vibration mit mindestens einem mit dem ersten Loch (702a) ausgerichteten dritten Loch und mindestens einen durch das dritte Loch gehenden Bolzen (80) zum Verbinden der Absorptionseinrichtung (50) für axiale Vibration mit dem Anbringungsbügel (70) aufweist und die Absorptionseinrichtung (50) für axiale Vibration benachbart zu dem ersten Loch (702a) vorgesehen ist,
dadurch gekennzeichnet, daß das zweite Loch in dem Flanschabschnitt (11) senkrecht dem ersten Loch in der montierten Position des Kompressors (10) zugewandt ist, daß die Absorptionseinrichtung (50) für axiale Vibration benachbart zu dem zweiten Loch (9) vorgesehen ist und mindestens ein mit dem zweiten Loch ausgerichtetes viertes Loch (51) aufweist und daß mindestens ein Bolzen (30) durch das zweite Loch (9) zum Verbinden des Kompressors (10) mit der Absorptionseinrichtung (50) für axiale Vibration geht.

2. Anbringungsmechanismus nach Anspruch 1, bei dem die Absorptionseinheit (50) Innenseiten- und Außenseitenabstandshalter (62, 61) aufweist, wobei das Vibrationsabsorptionsmaterial (63) in der ringförmigen Rille zwischen den Abstandshaltern (62, 61) vorgesehen ist.

3. Anbringungsmechanismus nach Anspruch 2, bei dem das Vibrationsabsorptionsmaterial ein Vibrationsisoliergummi ist.

4. Anbringungsmechanismus nach Anspruch 1, bei dem eine Mehrzahl der Absorptionseinrichtungen für axiale Vibration einstückig miteinander durch Rippen (54, 55) verbunden sind.


**Revendications**

1.- Mécanisme de montage pour relier un compresseur (10) d'installation de conditionnement d'air pour une automobile à un moteur d'automobile (40), de telle sorte qu'un arbre menant du compresseur est disposé parallèlement à l'arbre menant du moteur (40), le mécanisme de montage comprenant une patte de montage (20, 70) fixée au moteur (40) et ayant au moins un premier trou (702a), au moins une partie formant bride (11) s'avançant depuis une surface périphérique extérieure du compresseur (10) et ayant au moins un deuxième trou (9), des moyens amortisseurs de vibration axiale (50) présentant au moins un troisième trou aligné avec ledit premier trou (702a) et au moins un boulon (80) traversant ledit troisième trou pour relier lesdits moyens amortisseurs de vibration axiale (50) à ladite patte de montage (70), lesdits moyens amortisseurs de vibration axiale (50) étant placés à côté dudit premier trou (702a), caractérisé en ce que ledit deuxième trou dans ladite partie formant bride (11) fait face perpendiculairement audit premier trou lorsque le compresseur (10) est en position montée, en ce que lesdits moyens amortisseurs de vibration axiale (50) sont placés à côté dudit deuxième trou (9) et présentent au moins un quatrième trou (51) aligné avec ledit deuxième trou, et en ce qu'au moins un boulon (30) traverse ledit deuxième trou (9) pour relier ledit compresseur (10) auxdits moyens amortisseurs de vibration axiale (50).

2.- Mécanisme de montage selon la revendication 1, caractérisé en ce que ladite unité d'amortissement (50) comporte des écarteurs intérieur et extérieur (62, 61), le matériau amortisseur de vibrations (63) étant placé dans l'évidement annulaire situé entre lesdits écarteurs (62, 61).

3.- Mécanisme de montage selon la revendication 2, caractérisé en ce que ledit matériau amortisseur de vibration est du caoutchouc servant à l'isolation des vibrations.

4.- Mécanisme de montage selon la revendication 1, caractérisé en ce qu'une pluralité desdits moyens amortisseurs de vibration axiale sont reliés d'un seul tenant les uns aux autres par des nervures (54, 55).

EP 0 339 682 B1

Fig. 1

Fig. 2

Fig.3

Fig. 4

Fig. 5

Fig. 6